# EUROPEAN PATENT APPLICATION

(11) **EP 2 931 002 A1**
(43) Date of publication of application: **14.10.2015**
(21) Application number: 13861330.2
(22) Date of filing: 09.12.2013
(51) Int. Cl.: H04W 80/10, H04W 92/18

(54) **METHOD AND DEVICE FOR SESSION INITIALIZATION IN WIRELESS COMMUNICATION SYSTEM**

(30) Priority: 09.12.2012 US 201261735042 P
(71) Applicant: LG Electronics Inc., Seoul 150-721 (KR)
(72) Inventor: KIM, Dongcheol, Anyang-si Gyeonggi-do 431-080 (KR); LEE, Byungjoo, Anyang-si Gyeonggi-do 431-080 (KR); KIM, Jinho, Anyang-si Gyeonggi-do 431-080 (KR); LEE, Wookbong, Anyang-si Gyeonggi-do 431-080 (KR); CHO, Hangyu, Anyang-si Gyeonggi-do 431-080 (KR)
(74) Representative: Cabinet Plasseraud
(86) International application number: PCT/KR2013/011349
(87) International publication number: WO 2014/088378

(57) **Abstract**

One embodiment of the present invention is a method for session initialization in which a first device for supporting a Wi-Fi direct service initializes a send session with a second device. The method for session initialization comprises the steps of: establishing an application service platform (ASP) session; and initializing the send session using a uniform resource locator (URL) related to a device description, wherein the URL related to the device description is acquired prior to the completion of the establishment of the ASP session.

## Description

### [Technical Field]

The present invention relates to a wireless communication system, and more particularly, to a method and apparatus for initializing a session related to Wireless Fidelity (Wi-Fi) Direct.

### [Background Art]

Along with the recent development of information and communication technology, various wireless communication technologies have been developed. Among them, Wireless Local Area Network (WLAN) enables wireless access to the Internet based on radio frequency technology through a portable terminal such as a Personal Digital Assistant (PDA), a laptop computer, a Portable Multimedia Player (PMP) in a home, an office, or a specific service providing area.

The introduction of Wi-Fi Direct or Wi-Fi Peer-to-Peer (Wi-Fi P2P) is under discussion, as a direct communication technology that facilitates interconnection between devices without a wireless Access Point (AP) which is a basic requirement for a legacy WLAN system. According to Wi-Fi Direct, devices can be connected to each other without a complex establishment procedure and an operation for exchanging data at a communication rate offered by a general WLAN system can be supported to provide various services to users.

Recently, various Wi-Fi-enabled devices have been used. Among them, the number of Wi-Fi Direct-enabled devices which are Wi-Fi devices capable of communicating with each other without an AP is increasing. The Wi-Fi Alliance (WFA) has been discussing the introduction of a platform supporting various services (e.g., Send, Play, Display, Print, etc.) using a Wi-Fi Direct link. This may be referred to as Wi-Fi Direct Service (WFDS). According to WFDS, applications, services, etc. can be controlled or managed by a service platform called Application Service Platform (ASP).

### [Disclosure]

### [Technical Problem]

An object of the present invention devised to solve the conventional problem is to provide a method for initializing a session for a Send service in Wi-Fi Direct.

It will be appreciated by persons skilled in the art that the objects that could be achieved with the present invention are not limited to what has been particularly described hereinabove and the above and other objects that the present invention could achieve will be more clearly understood from the following detailed description.

### [Technical Solution]

In an aspect of the present invention, a method for initializing a send session with a second device by a first device supporting a Wireless Fidelity (Wi-Fi) Direct service includes establishing an Application Service Platform (ASP) session, and initializing a send session using a Uniform Resource Locator (URL) related to a device description. The URL related to the device description is acquired before the establishment of the ASP session.

In another aspect of the present invention, a first device supporting a Wi-Fi Direct service includes a reception module and a processor. The processor is configured to establish an ASP session and initialize a send session using a URL related to a device description. The URL related to the device description is acquired before the establishment of the ASP session.

The above aspects of the present invention may include the followings.

The URL related to the device description may be included in an Advertisement() method transmitted by a service layer of the second device.

The URL related to the device description included in the Advertisement() method may be provided to the first device by one or more of a probe request procedure and a service discovery procedure.

A discovery procedure related to Universal Plug and Play (UPnP) may not be performed during the initialization of the send session.

A parameter related to a service information request transmitted by a service layer of the first device may be set to a value other than NULL.

The parameter related to the service information request may be included in a SeekService method.

The URL related to the device description may be included in a ConfirmService() method transmitted by a service layer of the second device.

The URL related to the device description included in the ConfirmService() method may be transmitted to the first device by a provision discovery procedure or a group formation procedure.

The URL related to the device description may be included in a SessionReady() method transmitted by a service layer of the second device.

The method may further include acquiring a device description using a URL related to the device description, and acquiring information related to file transfer using a URL related to a service description included in the device description.

The device description may include one or more of device information, a parameter, an Operating System (OS) type/version, a UPnP version, the URL related to the service description, a URL for control, a URL for eventing, and a URL for presenting.

The first device may perform a CloseSession() action even though the transfer is in a canceled state.

### [Advantageous Effects]

According to the present invention, since a Universal Plug and Play (UPnP) discovery procedure can be omitted, session initialization for a Send service can be performed efficiently.

It will be appreciated by persons skilled in the art that the effects that can be achieved with the present invention are not limited to what has been particularly described hereinabove and other advantages of the present invention will be more clearly understood from the following detailed description taken in conjunction with the accompanying drawings.

### [Description of Drawings]

The accompanying drawings, which are included to provide a further understanding of the invention and are incorporated in and constitute a part of this application, illustrate embodiments of the invention and together with the description serve to explain the principle of the invention. In the drawings:
Fig. 1 illustrates an exemplary configuration of an Institute of Electrical and Electronics Engineers (IEEE) 802.11 system;
Fig. 2 illustrates an exemplary Wireless Fidelity (Wi-Fi) Direct network;
Fig. 3 is a flowchart illustrating an operation for configuring a Wi-Fi Direct network;
Fig. 4 is a diagram illustrating a signal flow for a neighbor discovery procedure;
Fig. 5 is a view referred to for describing a new aspect of a Wi-Fi Direct network;
Fig. 6 is a view referred to for describing a method for establishing a link for Wi-Fi Direct communication;
Fig. 7 is a view referred to for describing a method for associating with a Wi-Fi Direct communication group;
Fig. 8 is a view referred to for describing a method for establishing a link for Wi-Fi Direct communication;
Fig. 9 is a view referred to for describing a method for establishing a link that associates with a Wi-Fi Direct communication group;
Fig. 10 is a view referred to for describing Wi-Fi Direct Service (WFDS) framework components;
Fig. 11 is a view referred to for describing a WFDS operation;
Fig. 12 is a view referred to for describing an Application Service Platform (ASP) setup sequence in WFDS;
Fig. 13 is a view referred to for describing a Send service in WFDS;
Fig. 14 is a diagram illustrating a signal flow for an operation for initializing a Send session according to an embodiment of the present invention;
Figs. 15 and 16 are diagrams illustrating a signal flow for an operation for terminating a Send session according to an embodiment of the present invention;
Fig. 17 is a state diagram related to termination of a Send session according to an embodiment of the present invention; and
Fig. 18 is a block diagram of a wireless apparatus according to an embodiment of the present invention.

### [Best Mode for Carrying Out the Invention]

Reference will now be made in detail to the preferred embodiments of the present invention with reference to the accompanying drawings. The detailed description, which will be given below with reference to the accompanying drawings, is intended to explain exemplary embodiments of the present invention, rather than to show the only embodiments that can be implemented according to the invention. The following detailed description includes specific details in order to provide a thorough understanding of the present invention. However, it will be apparent to those skilled in the art that the present invention may be practiced without such specific details.

The embodiments of the present invention described below are combinations of elements and features of the present invention in specific forms. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions or elements of any one embodiment may be included in another embodiment and may be replaced with corresponding constructions or features of another embodiment.

Specific terms used for the embodiments of the present invention are provided to help the understanding of the present invention. These specific terms may be replaced with other terms within the scope and spirit of the present invention.

In some instances, to prevent the concept of the present invention from being ambiguous, structures and apparatuses of the known art will be omitted, or will be shown in the form of block diagram based on main functions of each structure and apparatus. Also, wherever possible, like reference numerals denote the same parts throughout the drawings and the specification.

The embodiments of the present invention can be supported by standard documents disclosed for at least one of wireless access systems, Institute of Electrical and Electronics Engineers (IEEE) 802, 3^{rd} Generation Partnership Project (3GPP), 3GPP Long Term Evolution (3GPP LTE), LTE-Advanced (LTE-A), and 3GPP2. Steps or parts that are not described to clarify the technical features of the present invention can be supported by those specifications. Further, all terms as set forth herein can be explained by the standard specifications.

Techniques described herein can be used in various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc. CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved-UTRA (E-UTRA) etc. For clarity, the present disclosure focuses on the IEEE 802.11 system. However, the technical features of the present invention are not limited thereto.

### Architecture of Wireless Local Area Network (WLAN) System

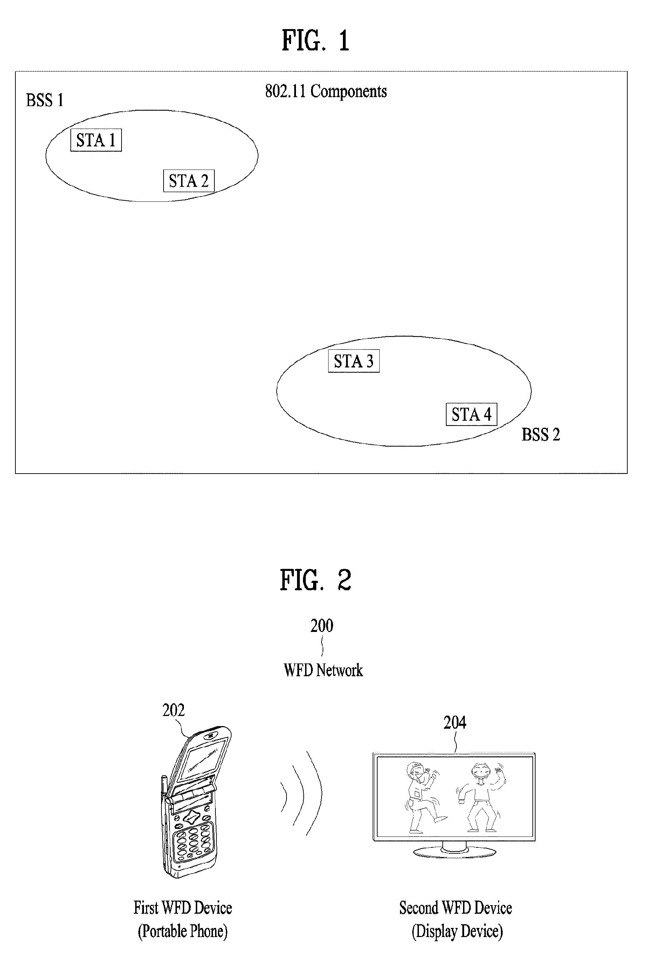

Fig. 1 illustrates an exemplary configuration of an IEEE 802.11 system to which the present invention is applicable.

The IEEE 802.11 architecture may include a plurality of components. A WLAN that supports Station (STA) mobility transparent to higher layers may be provided through interaction between the components. A Basic Service Set (BSS) is a basic building block of an IEEE 802.11 LAN. Fig. 1 illustrates two BSSs, BSS1 and BSS2, each with two STAs that are members of the BSS (STA1 and STA2 are included in BSS1 and STA3 and STA4 are included in BSS2). Each of the BSSs covers an area in which the STAs of the BSS maintain communication, as indicated by an oval. This area may be referred to as a Basic Service Area (BSA). As an STA moves out of its BSA, it can no longer communicate directly with other members of the BSA.

An Independent Basic Service Set (IBSS) is the most basic type of BSS in the IEEE 802.11 LAN. For example, a minimum IBSS includes only two STAs. A BSS, BSS1 or BSS2 which is the most basic type without other components in FIG. 1 may be taken as a major example of the IBSS. This configuration may be realized when STAs communicate directly. Because this type of LAN is often formed without pre-planning for only as long as the LAN is needed, it is often referred to as an ad hoc network.

The membership of an STA in a BSS may be dynamically changed when the STA is powered on or off or the STA moves into or out of the coverage area of the BSS. To be a member of the BSS, an STA may join the BSS by synchronization. To access all services of a BSS infrastructure, the STA should be associated with the BSS. This association may be dynamically performed and may involve use of a Distributed System Service (DSS).

In addition, Fig. 1 illustrates components such as a Distribution System (DS), a Distribution System Medium (DSM), an Access Point (AP), etc.

In a WLAN, PHYsical layer (PHY) limitations determine a direct station-to-station distance that may be supported. For some networks, this distance may be sufficient, whereas for other networks, communication between STAs farther from each other may be required. To support increased coverage, a DS may be configured.

An architectural component used to interconnect BSSs is the DS. Instead of existing independently, a BSS may also form a component of an extended form of a network that is built with multiple BSSs.

The DS is a logical concept and may be defined by characteristics of the DSM. In this regard, IEEE 802.11 logically separates the Wireless Medium (WM) from the DSM. Each logical medium is used for a different purpose by a different component of the architecture. The IEEE 802.11 definitions neither preclude, nor demand, that the multiple media be either the same or different. Recognizing that the multiple media are logically different is a key to understanding of the flexibility of the architecture. The IEEE 802.11 LAN architecture may be realized in various manners and may be specified independently of the physical characteristics of any specific implementation.

The DS may support mobile devices by providing logical services needed to handle address-to-destination mapping and seamless integration of multiple BSSs.

An AP is an entity that provides access to the DS to associated STAs in addition to acting as an STA. Data may move between a BSS and the DS via an AP. For example, STA2 and STA3 illustrated in Fig. 1 provide access to the DS to associated STAs (STA1 and STA4), having STA functionality. Since all APs are basically STAs, they are addressable entities. Addresses used by an AP for communication on the WM and DSM are not necessarily the same.

Data that one of STAs associated with the AP transmits to an STA address of the AP may always be received at an uncontrolled port and processed by an IEEE 802.1X port access entity. If a controlled port is authenticated, transmission data (or frames) may be transmitted to the DS.

### Layer Architecture

In the WLAN system, an operation of an STA may be described from the perspective of layer architecture. Layer architecture in terms of device configuration may be implemented by a processor. An STA may have a plurality of layer structures. For example, the 802.11 standard specifications mainly deal with the Medium Access Control (MAC) sublayer of the Data Link Layer (DLL) and the PHY layer. The PHY layer may include a Physical Layer Convergence Protocol (PLCP) entity and a Physical Medium Dependent (PMD) entity. Both the MAC sublayer and the PHY layer conceptually include management entities, called MAC Sublayer Management Entity (MLME) and PHY Layer Management Entity (PLME). These entities provide layer management service interfaces through which layer management functions may be invoked.

In order to provide a correct MAC operation, a Station Management Entity (SME) is present within each STA. The SME is a layer-independent entity that may be viewed as residing in a separate management plane or as residing off to the side. The exact functions of the SME are not specified herein, but in general this entity may be viewed as being responsible for such functions as gathering of information about layer-dependent statuses from various Layer Management Entities (LMEs) and similarly setting of the values of layer-specific parameters. The SME may typically perform such functions on behalf of general system management entities and may implement standard management protocols.

The foregoing entities interact in various ways. For example, the entities may interact with each other by exchanging GET/SET primitives. A primitive refers to a set of elements or parameters related to a specific purpose. An XX-GET.request primitive is used to request the value of a given MIB attribute (management information-based attribute information). An XX-GET.confirm primitive returns an appropriate MIB attribute value if Status = "success" and otherwise, returns an error indication in a Status field. An XX-SET.request primitive is used to request that an indicated MIB attribute be set to a given value. If this MIB attribute implies a specific action, then this requests that the action be performed. An XX-SET.confirm primitive confirms that an indicated MIB attribute was set to a requested value, if Status = "success," and otherwise, it returns an error condition in the Status field. If this MIB attribute implies a specific action, then this confirms that the action was performed.

The MLME and the SME may exchange various MLME_GET/SET primitives via an MLME_SAP (Service Access Point). Also, various PLMEM_GET/SET primitives may be exchanged between the PLME and the SME via a PLME_SAP and between the MLME and the PLME via an MLME-PLME_SA-P.

### Evolution of WLAN

The IEEE 802.11 group is working on the standardization of WLAN. IEEE 802.1 la and IEEE 802.11b use an unlicensed band in 2.4GHz or 5GHz. IEEE 802.11b offers a data rate of 11Mbps, whereas IEEE 802.11a offers a data rate of 54Mbps. IEEE 802.11g offers 54Mbps by applying Orthogonal Frequency Division Multiplexing (OFDM) in 2.4GHz and IEEE 802.11n offers 300Mbps by applying Multiple Input Multiple Output-OFMD (MIMO-OFDM). IEEE 802.11n supports a channel bandwidth of up to 40MHz. In this case, it provides a data rate of 600Mbps.

In a WLAN environment conforming to IEEE 802.11e, a Direct Link Setup (DLS)-related protocol is based on the premise of a Quality BSS (QBSS) meaning that a BSS supports Quality of Service (QoS). In the QBSS, an AP as well as a non-AP STA is a Quality AP (QAP) supporting QoS. However, even though a non-AP STA is a Quality STA (QSTA) supporting QoS in a current commercialized WLAN environment (e.g., conforming to IEEE 802.11a/b/g), most of APs are legacy APs that do not support QoS. As a result, the DLS service is not available even to a QSTA in the current commercialized WLAN environment.

Tunneled Direct Link Setup (TDLA) is a new wireless communication protocol proposed to overcome this limitation. Although the TDLS does not support QoS, it enables QSTAs to establish direct links even in the current commercialized IEEE 802.1 la/b/g WLAN environment and also even in Power Save Mode (PSM). Accordingly, the TDMS specifies an overall procedure for enabling QSTAs to establish direct links even in a BSS managed by a legacy AP. Hereinbelow, a wireless network supporting the TDLS is referred to as a TDLS network.

### Wi-Fi Direct Network

A legacy WLAN mainly deals with operations of an infrastructure BSS in which a wireless AP functions as a hub. An AP is responsible for supporting the PHY layer for wireless/wired connectivity, routing for devices in a network, and providing a service to add/remove a device to/from a network. In this case, devices of the network are connected to each other via the AP, not directly.

Standardization of Wi-Fi Direct as a technology supporting direct connectivity between devices is under discussion.

Fig. 2 illustrates an exemplary Wi-Fi Direct network. The Wi-Fi Direct network, which was proposed by the Wi-Fi Alliance (WFA), enables Wi-Fi devices to conduct Device-to-Device (D2D) (or Peer-to-Peer (P2P)) communication without joining a home network, an office network, and a hotspot network. Hereinafter, Wi-Fi Direct-based communication will be referred to as WFD D2D communication (shortly D2D communication) or WFD P2P communication (shortly, P2P communication). Also, a WFD P2P-enabled device will be referred to as a WFD P2P device, or shortly a P2P device.

Referring to Fig. 2, a WFD network 200 may include one or more Wi-Fi devices, for example, a first WFD device 202 and a second WFD device 204. The WFD devices include Wi-Fi-enabled devices such as a display device, a printer, a digital camera, a projector, and a smartphone. Also, the WFD devices include a non-AP STA and an AP STA. In the illustrated example, the first WFD device 202 is a portable phone and the second WFD device 204 is a display device. In the WFD network, WFD devices may be connected directly to each other. Specifically, P2P communication may refer to direct setup of a signal transmission path between two WFD devices without intervention of a third device (e.g., an AP) or a legacy network (e.g., connection to a WLAN via an AP). The signal transmission path established directly between the two WFD devices may be limited to a data transmission path. For example, P2P communication may mean transmission of data (e.g., audio/video/text information, etc.) between a plurality of non-AP STAs without intervention of an AP. A signal transmission path for control information (e.g., resource allocation information for P2P setup, wireless device identification information, etc.) may be established directly between WFD devices (e.g., between a non-AP STA and a non-AP STA or between a non-AP STA and an AP), between two WFD devices (e.g., a non-AP STA and a non-AP STA) via an AP, or between an AP and a WFD device (e.g., between an AP and non-AP STA #1 or between an AP and non-AP STA #2).

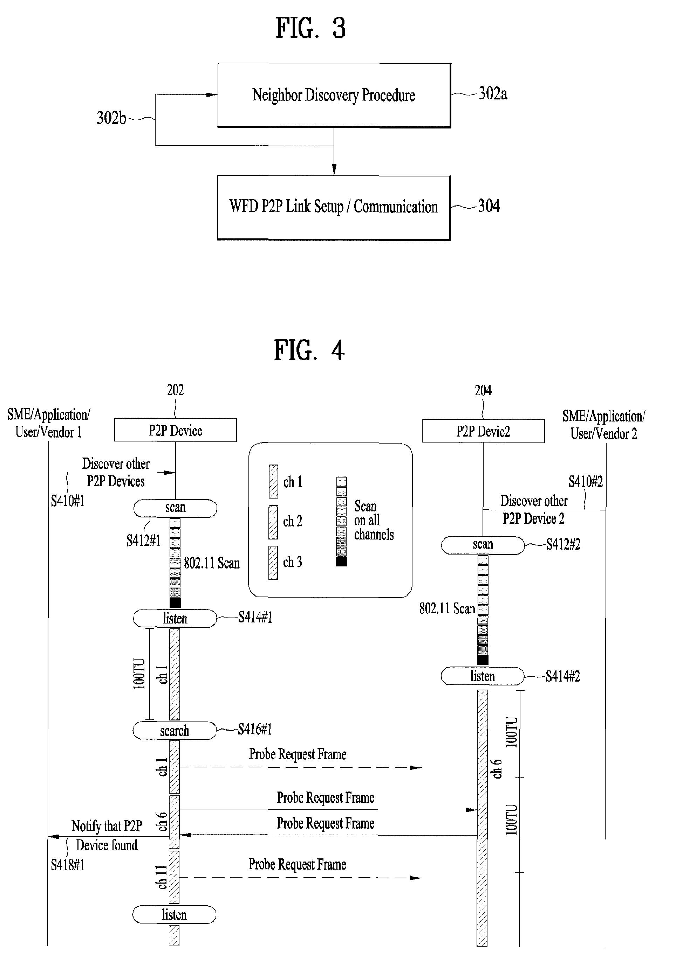

Fig. 3 is a flowchart illustrating an operation for configuring a WFD network.

Referring to Fig. 3, the operation for configuring a WFD network may be divided largely into two procedures. One of the procedures is a Neighbor Discovery (ND) procedure (S302a) and the other is a P2P link setup and communication procedure (S304). A WFD device (e.g., the WFD device 202 in Fig. 2) may discover another neighbor WFD device (e.g., the WFD device 204 in Fig. 2) within its (wireless) coverage and may acquire information required for association, for example, pre-association with the WFD device. Herein, pre-association may mean Layer 2 (L2) pre-association in a radio protocol. The information required for pre-association may include, for example, identification information about the neighbor WFD device. The ND procedure may be performed on an available radio channel basis (S302b). Then, the WFD device 202 may perform the WFD P2P link setup/communication procedure with the other WFD device 204. For example, after the WFD device 202 is associated with the neighbor WFD device 204, the WFD device 202 may determine whether the WFD device 204 satisfies a service requirement of a user. For this purpose, the WFD device 202 may search for the WFD device 204 after the L2 pre-association with the WFD device 204. If the WFD device 204 does not satisfy the user's service requirement, the WFD device 202 may release the L2 association with the WFD device 204 and then may set up L2 association with another WFD device. On the other hand, if the WFD device 204 satisfies the user's service requirement, the two WFD devices 202 and 204 may transmit and receive signals via a P2P link.

Fig. 4 is a diagram illustrating a signal flow for the ND procedure. The example of Fig. 4 may be understood as illustrating an operation between the WFD devices 202 and 204 illustrated in Fig. 3.

Referring to Fig. 4, the ND procedure of Fig. 3 may be initiated by a command from an SME/application/user/vender (S410). The ND procedure may be divided into a scan phase (S412) and a find phase (S414 and S416). The scan phase (S412) includes an operation for scanning all available radio channels according to IEEE 802.11. Thus, a P2P device may detect a best operation channel. The find phase (S414 and S416) includes listen mode (S414) and search mode (S416), and the P2P device repeatedly alternates between the listen mode (S414) and the search mode (S416). The P2P devices 202 and 204 perform active search using a probe request frame in the search mode (S416) and may limit a search range to social channels of channels 1, 6, and 11 (e.g., 2412, 2437, and 2462MHz), for fast search. Also, the P2P devices 202 and 204 select only one of the three social channels and are kept in a reception state in the listen mode (S414). Upon receipt of a probe request frame in the search mode from the other P2P device (e.g., 202), the P2P device (e.g., 204) replies to the transmitting P2P device with a probe response frame. A random listen mode time may be given (e.g., 100, 200, or 300 Time Units (TUs)). The P2P devices may tune to a common channel by repeating the search mode and the reception mode. After a P2P device discovers another P2P device, the P2P device may discover/exchange a device type, a manufacturer, or a familiar device name using a probe request frame and a probe response frame in order to be selectively associated with the other P2P device. When the P2P device discovers a neighbor P2P device and acquires necessary information from the discovered P2P device by the ND procedure, the P2P device (e.g., 202) may notify the SME/application/user/vendor of the discovery of the P2P device (S418).

At present, P2P communication is used mainly for semi-static communication such as remote printing, photo sharing, etc. Along with the proliferation of Wi-Fi devices and location-based services, P2P communication has gained increasing popularity. For example, it is expected that P2P communication will be used for social chatting (e.g., recognition of a neighbor wireless device and transmission and reception of information to and from the neighbor wireless device by a wireless device subscribed to Social Network Service (SNS)), location-based advertisement, location-based news broadcasting, and game interaction between wireless devices. For the convenience's sake, these P2P applications will be referred to as new P2P applications.

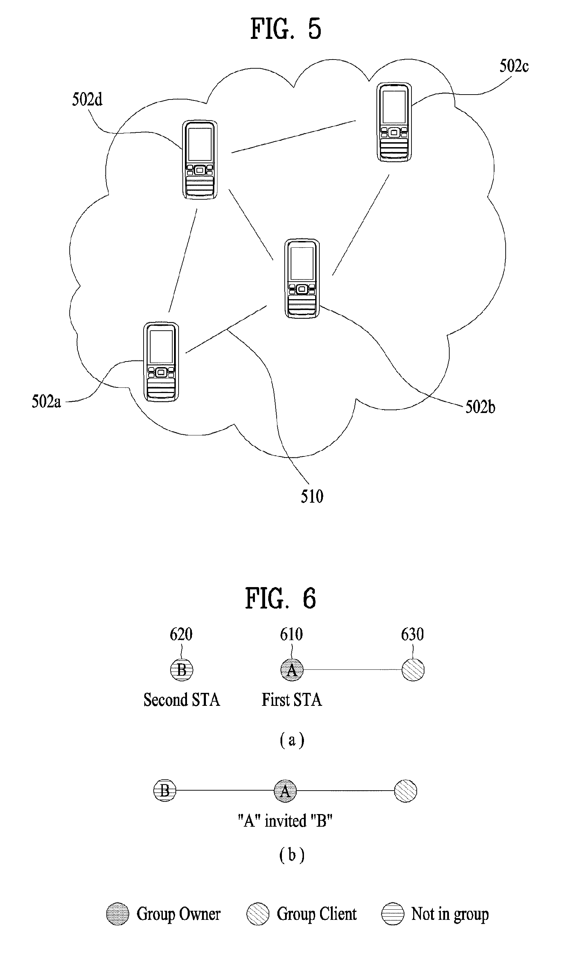

Fig. 5 illustrates a new aspect of a WFD network.

The example of Fig. 5 may be understood as a WFD network aspect in the case where a new P2P application (e.g., social chatting, location-based service, and game interaction) is used.

Referring to Fig. 5, a plurality of P2P devices 502a to 502d perform P2P communication (510) in the WFD network. A P2P device(s) that forms the WFD network may be often changed due to movement of the P2P devices(s), or the WFD network may be generated or deleted dynamically/in a short term. As described above, the new P2P applications are characterized in that P2P communication may be conducted and terminated dynamically/in a short term between a large number of P2P devices in a densely populated network environment.

Fig. 6 illustrates a method for establishing a link for WFD communication.

Referring to Fig. 6a, a first STA (hereinafter, referred to as A) 610 is operating as a group owner in legacy WFD communication. When A 610 discovers a new WFD communication target, a second STA (hereinafter, referred to as B) 620 that is not conducting WFD communication during communication with a group client 630 in the legacy WFD communication, A 610 attempts to set up a link with B 620. In this case, since the WFD communication between A 610 and B 620 is new WFD communication and A is a group owner, communication may be set up separately from communication with the legacy group client 630. One WFD group may include one group owner and one or more group clients. As one group owner A 610 is satisfied, a WFD link may be set up as illustrated in Fig. 6b. In this case, A 610 invites B 620 to the legacy WFD communication group. In view of the nature of WFD communication, WFD communication may be possible between A 610 and B 620 and between A 610 and the legacy group client 630, but WFD communication may not be supported between B 620 and the legacy group client 630. If an Intra-BSS option is enabled (or set to On) among Wi-Fi Direct P2P group capabilities, WFD communication (direct communication between clients within the Wi-Fi Direct BSS) may be possible between B 620 and the legacy group client 630.

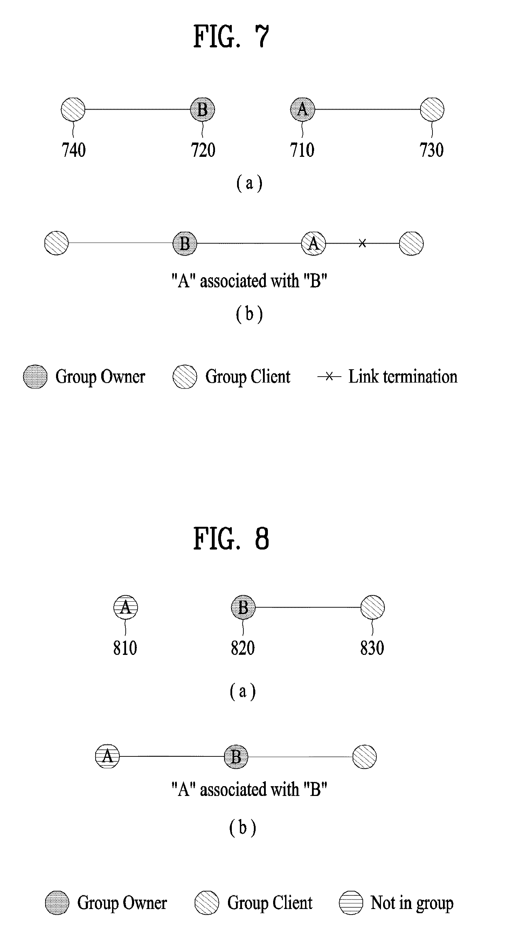

Fig. 7 is a view referred to for describing a method for associating with a WFD communication group.

Referring to Fig. 7a, a first STA (hereinafter, referred to as A) 710 as a group owner is communicating with a group client 730, and a second STA (hereinafter, referred to as B) 720 as a group owner is communicating with a group client 740. Referring to Fig. 7b, A 710 may terminate the on-going WFD communication and associate with the WFD communication group of B 720. Since B 720 is a group owner, A 710 becomes a group client. It is preferred that A 710 terminates the on-going WFD communication before requesting association to B 720.

Fig. 8 is a view referred to for describing a method for establishing a link for WFD communication.

Referring to Fig. 8a, a second STA (hereinafter, referred to as B) 820 is operating as a group owner during on-going WFD communication. While B 820 is conducting WFD communication with a group client 830, a first STA (hereinafter, referred to as A) 810 that is not conducting WFD communication and has discovered B 820 attempts to establish a link for new WFD communication with B 820. If B 820 accepts the link setup, a new WFD communication link is established between A 810 and B 820 and thus A 810 operates as a client of the WFD group of B 820. In this case, A 810 has associated with the WFD communication group of B 820. A 810 may conduct WFD communication only with the group owner B 820 and WFD communication may not be supported between A 810 and an existing WFD communication client 830. If an Intra-BSS option is enabled (or set to On) among Wi-Fi Direct P2P group capabilities, WFD communication (direct communication between clients within the Wi-Fi Direct BSS) may be possible between A 810 and the legacy group client 830.

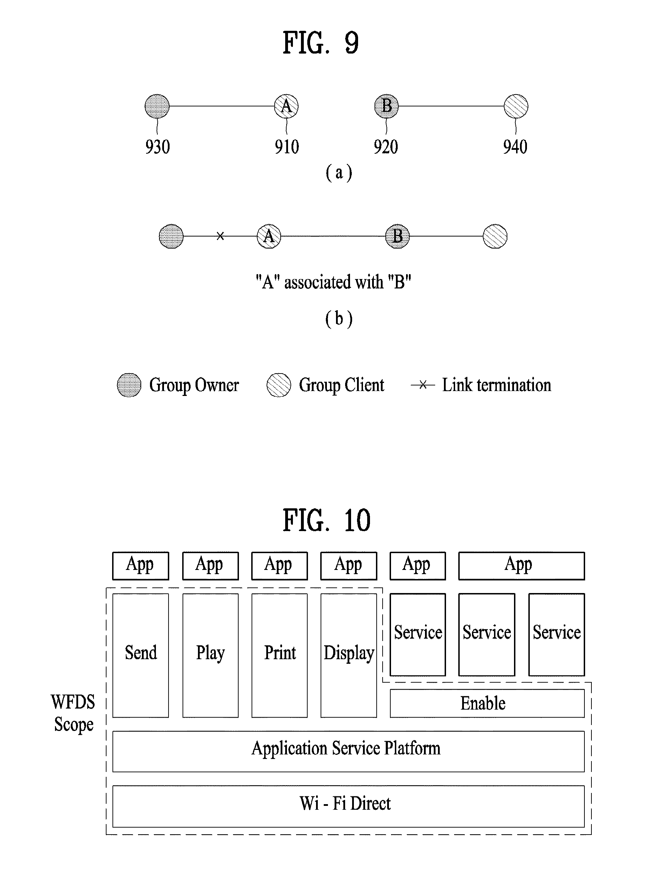

Fig. 9 is a view referred to for describing a method for establishing a link that associates with a WFD communication group.

Referring to Fig. 9a, a first STA (hereinafter, referred to as A) 910 as a group client is conducting WFD communication with a group owner 930. Upon discovery of a second STA (hereinafter, referred to as B) 920 as a group owner communicating with a group client by another WFD communication, A 910 may terminate the link with the group owner 930 and join the WFD of B 920.

### Wi-Fi Direct Service (WFDS)

WFD is a network connectivity standard technology that defines even link-layer operations. Because no standard is defined for an application operating in a higher layer of a link configured by WFD, when WFD devices are connected to each other and then execute an application, it is difficult to support compatibility. To solve this problem, the WFA is working on standardization of an operation of a higher-layer application called WFDS.

Fig. 10 illustrates components of a WFDS framework.

Referring to Fig. 10, a Wi-Fi Direct layer is a MAC layer defined by the Wi-Fi Direct standard. The Wi-Fi Direct layer may include software compatible with the Wi-Fi Direct standard. A wireless connection may be configured by a PHY layer (not shown) compatible with the Wi-Fi PHY layer, under the Wi-Fi Direct layer. A platform called Application Service Platform (APS) is defined above the Wi-Fi Direct layer.

The ASP is a common shared platform and performs session management, service command processing, and control and security between ASPs between its overlying Application layer and its underlying Wi-Fi Direct layer.

A Service layer is defined above the ASP. The Service layer includes use case-specific services. The WFA defines four basic services, Send, Play, Display, and Print. Also, an Enable Application Program Interface (API) is defined to use an ASP common platform when a third party application other than the basic services is supported.

While Send, Play, Display, Print, or services defined by third party applications are shown in Fig. 10 as exemplary services, the scope of the present invention is not limited thereto. For example, the term "service" may mean any of services supporting Wi-Fi Serial Bus (WSB), Wi-Fi Docking, or Neighbor Awareness Networking (NAN), in addition to Send, Play, Display, Print, or the services defined by the third party applications.

Send is a service and application that can perform file transfer between two WFDS devices. Play is a service and application that enable sharing or streaming of Digital Living Network Alliance (DLNS)-based Audio/Video (A/V), photos, music, etc. between two WFDS devices. Print is a service and application that enable output of text and photos between a device having content such as text, photos, etc. and a printer. Display is a service and application that enable screen sharing between a miracast source and a miracast sink of the WFA.

The Application layer may provide a User Interface (UI), represent information as a human-perceivable form, and provide a user input to a lower layer.

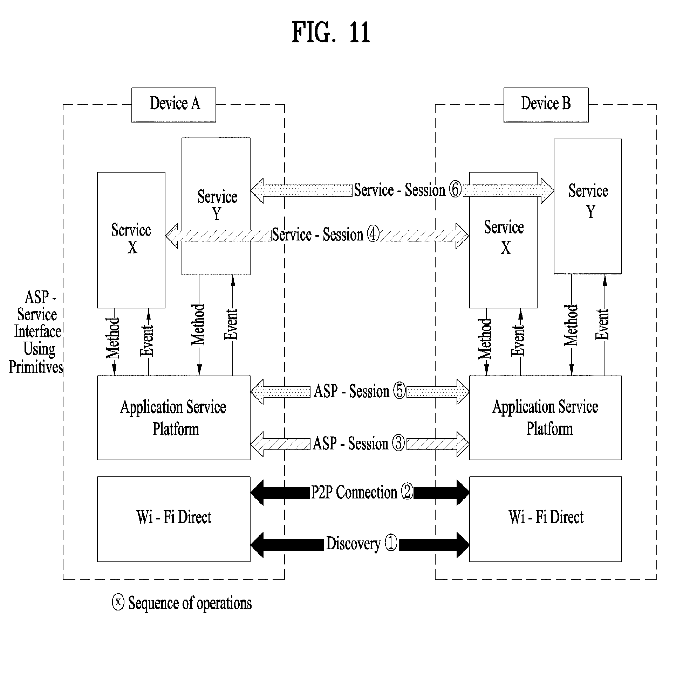

Fig. 11 is a view referred to for describing a WFDS operation.

Referring to Fig. 11, it is assumed that there are two peer devices A and B.

An ASP is a logical entity that executes common functions required for services. These functions may include device discovery, service discovery, ASP-session management, connectivity topology management, security, etc.

An ASP-session is a logical link between the ASPs of devices A and B. To initiate the ASP-session, a P2P connection needs to be set up between the peer devices. The ASP may set up a plurality of ASP-sessions between the two devices. Each ASP-session may be identified by a session Identifier (ID) allocated by an ASP requesting the ASP-session.

A service is a logical entity that provides use case-specific functions to other services or applications using the ASP. A service of one device may communicate with matching services of one or more other devices using a service-specific protocol (it may be defined by a service standard and an ASP protocol).

An interface between the ASP and the service may be defined by Method and Event. Method represents an operation initiated by the service and parameters (or fields) of Method may include information about an operation to be performed. Event provides information from the ASP to the service.

If a user wants to use service X between device A and device B, the ASP of each of the devices generates an ASP-session dedicated to service X between the devices. Then, when the user wants to use service Y, a new ASP-session for the service is established.

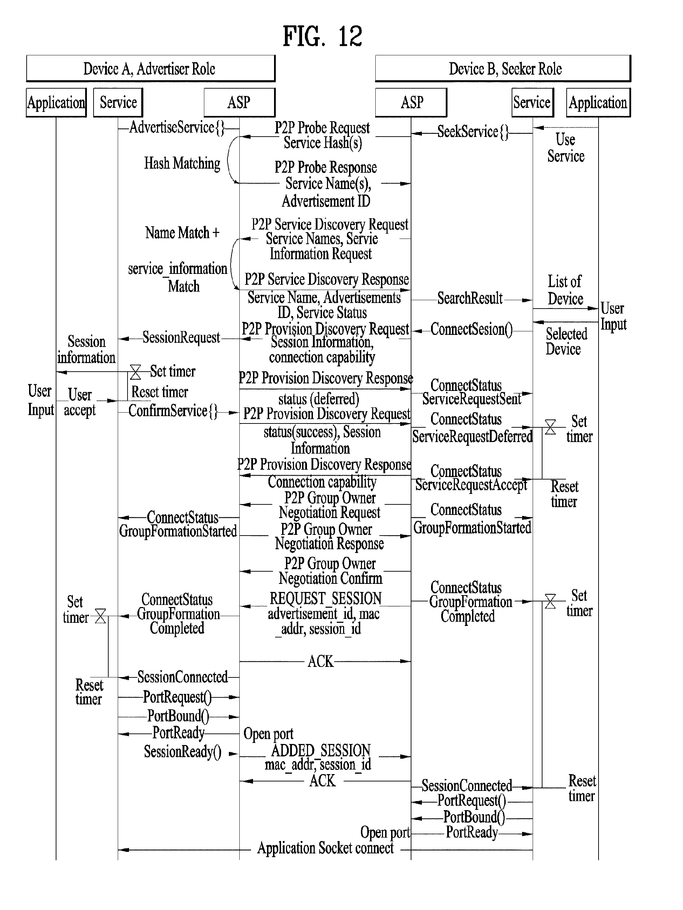

### Fig. 12 is a view referred to for describing an ASP session setup sequence in WFDS.

When operations are defined between two peer devices in WFDS, one of the peer devices may serve as an advertiser and the other peer device may serve as a seeker. The service seeker discovers a service advertiser(s) and when detecting an intended service, may request a connection to the service advertiser. In the example of Fig. 12, device A serves as an advertiser and device B serves as a service seeker.

The ASP session setup operation of Fig. 12 will be described in brief. A specific service of a WFDS device searches for another WFDS and service, requests the service, and sets up a Wi-Fi Direct connection, and then an application operates.

In Fig. 12, device A may advertise its service and wait for another device to discover the device. The ASP of device A may respond to another device based on information included an Advertisement() method provided by the Service layer.

Device B is a device that wants to search for a service and initiate the service. Device B searches for a device supporting the service, upon request of a higher application or a user. Upon receipt of information indicating a Use Service intention from the Application layer, the Service layer of device B may provide the information to the ASP by including information required for a SeekService() method.

Therefore, the ASP of device B may transmit a probe request frame to another device. The service name of the service that it wants to detect or it may support may be included in a hashed form in the probe request frame.

Upon receipt of the probe request frame, device A attempts hash matching. If device A supports the service corresponding to the hash value, device A may transmit a probe response frame to device B. A service name, an advertisement ID value, etc. may be included in the probe response frame.

This procedure for exchanging a probe request frame and a probe response frame may be referred to as a device discovery procedure in which devices A and B are identified as WFDS devices and services supported by devices A and B are determined.

Additionally, devices A and B may exchange information about details of a specific service by a P2P service discovery procedure. For example, device B may transmit information such as a service name (a plurality of service names if support or non-support of a plurality of services are to be determined), a service information request, etc. to device A by a service discovery request message. Then if service information is matched, device A may indicate to device B that the service will be provided. For example, a service discovery response message may include information such as a service name, an advertisement ID, a service status, etc. The service status information indicates whether a service requested by a remote device is available from the service advertiser. This service discovery procedure may be performed by a Generic Advertisement Protocol (GAS) defined by IEEE 802.11u.

Upon completion of the operation requested by the SeekService() method requested by the Service layer, the ASP of device B may indicate its result (i.e. SearchResult) to the application and the user by the service.

Up to this time, a Wi-Fi Direct group has not been formed. When the user selects a service and the service performs a session connection (i.e., ConnectSession), a P2P group is formed. Herein, session information and connection capability information are exchanged by a provision discovery request and a provision discovery response.

The session information is hint information that roughly describes the service requested by the service-requesting device. For example, if file transfer is requested, the session information specifies the number of files and file sizes so that the other party may determine whether to accept or reject the service request. The connection capability information may be used in generating a group in a Group Owner (GO) negotiation and P2P invitation procedure.

When device B transmits a provision discovery request message to device A, the ASP of device A transmits a session request (SessionRequest) including service information, etc. to the Service layer and the Service layer transmits the service information to the application/user. If the application/user determines to accept the session based on the session information, the application/user transmits a confirmation (ConfirmService()) to the ASP through the Service layer.

During the time, the ASP of device A transmits a provision discovery response message to device B. Status may be set to Deferred in the provision discovery response message. This is done to indicate that the service is not accepted immediately and reception of a user input is awaited. Accordingly, the ASP of device B may indicate to the Service layer that the service request is deferred, while transmitting a ConnectStatus event.

Upon receipt of ConfirmService() at the ASP of device A, device A may perform a follow-on provision discovery procedure. That is, device A may transmit a provision discovery request message to device B. This may be referred to as the follow-on provision discovery procedure. This message may include service information together with information indicating that the status of the service is success. Therefore, the ASP of device B may indicate to the Service layer that the service request has been accepted, while transmitting a ConnectStatus event to the Service layer. Also, the ASP of device B may transmit a provision discovery response message to device A. The provision discovery response message may include connection capability information.

After the P2P provision discovery procedure, a P2P group is created and an L2 connection and an Internet protocol (IP) connection are established by the GO negotiation or invitation procedure. A detailed description of the GO negotiation procedure will not be given herein.

After the P2P connection or the IP connection is created by completion of the GO negotiation, devices A and B transmit a REQUEST_SESSION message requesting a session by an ASP coordination protocol. The REQUEST_SESSION message may include an advertisement ID, a MAC address (mac_addr), and a session ID. The MAC address is an address of a P2P device. Device A may transmit an ACK message to device B in response to the REQUEST_SESSION message.

Upon receipt of the ACK message, device A may indicate the session connection to a higher-layer service/application and the Service layer may request port information about the session and bind the session with a port. Accordingly, the ASP may open the port (the ASP may open the port within a firewall) and indicate to the Service layer that the port is ready. The Service layer may indicate to the ASP that the session is ready (SessionReady()).

Therefore, the ASP of device A transmits an ADDED_SESSSION message to the other device. The ADDED_SESSSION message may include the session ID and the MAC address information. Thus, the service may be uniquely identified. Upon receipt of the ADDED_SESSSION message, the ASP of device B may indicate the session connection to the Service layer and also may indicate to the Service layer that a port is ready (PortReady()) through port request and port binding. The ASP may open the port within the firewall.

Subsequently, an application socket connection between the Service layers of devices A and B may be indicated. Since the ASP session is established in the above procedures, individual service-specific operations (for example, send, play, etc.) may be performed.

### WFD Send Service

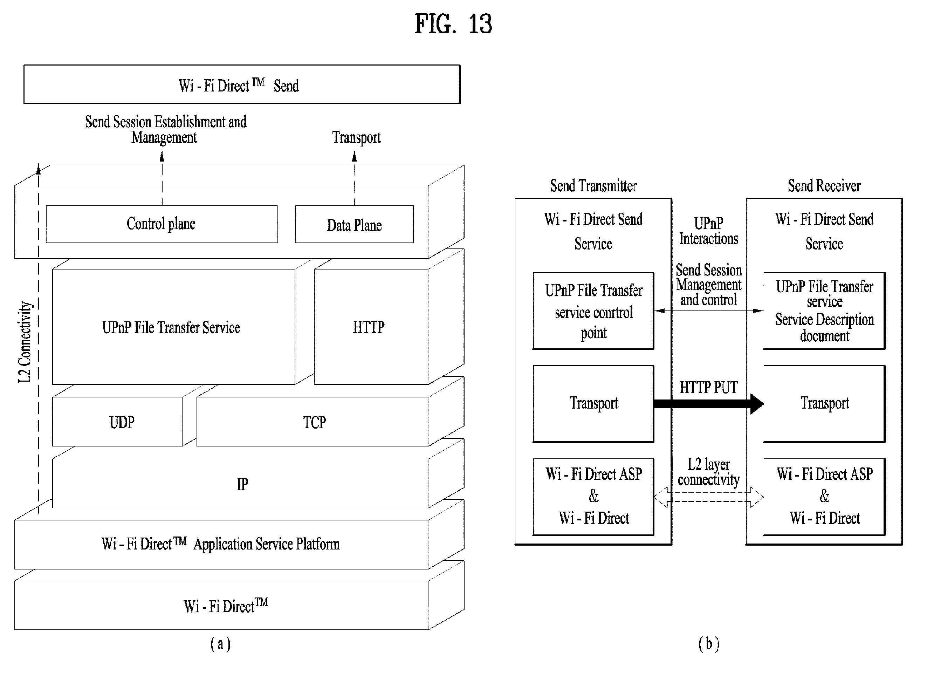

Fig. 13(a) illustrates the configuration of a Send service among WFD services. The WFD Send service include L2 connection (connectivity), a control plane, and a data plane. The Send service uses an interface provided by an ASP in order to discover a device to support the Send service. The control plane is used to establish and manage a WFD send session and the data plane is used to provide a transmission path for an actual file. Fig. 13(b) illustrates the functional structure of the WFD Send service. A send transmitter uses a UPnP activated control point for a WFD send session. 'Transport' is used to transmit an actual file from the send transmitter to a send receiver.

As illustrated in Fig. 13, the WFD Send service uses a UPnP protocol. More specifically, after an ASP session is established in WFD as illustrated in Fig. 12, the session is controlled and actual data is transmitted by the UPnP protocol. A UPnP control point (a terminal/device/equipment to use the service or a service seeker) may acquire a Uniform Resource Locator (URL) for a device description, an IP, a port, etc. by a discovery procedure defined by the UPnP and initialize a Send session. That is, after acquiring a device description (device information, a parameter, an OS type, a version, a UPnP version, a URL for a service description, a URL for control, a URL for eventing, a URL for presenting, etc.) using information such as the URL for the device description, the IP information, and the port information, etc., the UPnP control point may acquire information such as a command for performing file transfer, parameters/declaration related to the command, etc. using a URL for a service description. Since the Send session is initialized in the WFD Send service after the ASP session setup, the device to use the service already acquires the IP information during the ASP session setup. Accordingly, once only the URL information for the device specification can be acquired during the ASP session setup, the UPnP discovery procedure may be omitted, thereby increasing procedure efficiency. In other words, the URL for the device description is acquired in advance, for use in requesting HTTP GET. Therefore, the present invention proposes that the UPnP discovery procedure be omitted by acquiring the URL for the device description before the ASP session setup. A related specific embodiment will be described below.

### Acquisition of URL for Device Description During ASP Session Setup

A URL for a device description may be included in service_information of an Advertise service. In other words, the URL for the device description may be included in an Advertisement() method transmitted by the Service layer of a service advertiser. In this case, the URL for the device description included in the Advertisement() method may be transmitted to a service seeker by one or more of a probe request procedure and a service discovery procedure.

If the URL for the device description is included in the Advertisement() method as described above, the UPnP discovery procedure may be omitted during initialization of a Send session. If a parameter service_information_request related to a service information request of a SeekService method is set to NULL, the service seeker may fail to acquire the URL for the device description because the service discovery procedure is skipped. Thus, the parameter related to the service information request may be set to a value other than NULL along with the afore-described structure.

In another example, the URL for the device description may be included in a ConfirmService() method transmitted by the Service layer. In this case, the URL for the device description included in the ConfirmService() method may be provided to the service seeker by a provision discovery procedure or a group information procedure. In the provision discovery procedure, a provision discovery request may include a Service Instance attribute as illustrated in [Table 1].

**[Table 1]**

| Field | Size (octets) | Value (Hexadec imal) | Description |
|---|---|---|---|
| Number Of Files | 2 | Variable | No of files during the session |
| Total Size Of the Files | 4 | Variable | Total size in KBs |
| File or Container Name | Variable | Variable | This field should include the file name. For the single file transfer case, this field represent the name of the file to be transferred during the Send Session. When sending the multiple files, this field includes any one of file name as a representative for all other files. Which file to select to represent all other files depends on the implementation. For e.g., file which has biggest size. In case user sending multiple files in the container, then this field should include container name. The receiver device should interpret the text as UTF-8 string to be displayed on the user interface. |

Or the URL for the device description may be included in a SessionReady() method. That is, the URL information may be included in a session ready event transmitted from the Service layer of the service advertiser to the ASP layer of the service advertiser and then included in an ADDED_SESSION command. The ADDED_SESSION command may be transmitted to the service seeker. This information may be included in an ASP event and transmitted to a FileTransferservice of the send transmitter.

While the above descriptions have been given in the context of a URL for a device description, they are applicable to a URL for a service description. Also, these methods may be applied to a URL for control or a URL for eventing. Or an FTS server may indicate URL information for a service description/control/eventing at the same time or in combination of one or more in the above proposed method by skipping the step of acquiring a device description.

### Send Session Initialization

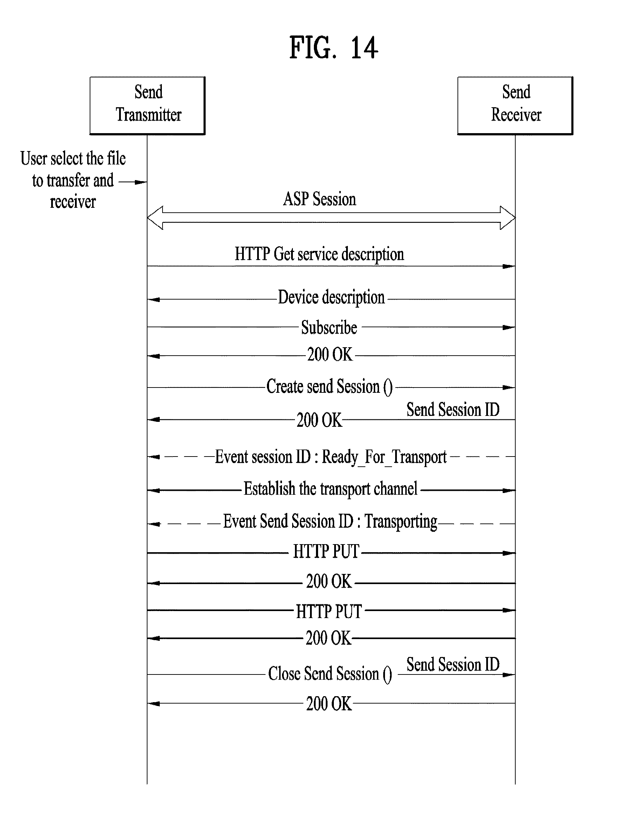

Fig. 14 is a diagram illustrating a signal flow for an operation for initializing a Send session according to an embodiment of the present invention. In Fig. 14, a send transmitter may be a service seeker and a send receiver may be a service advertiser. An ASP session may be established between the send transmitter and the send receiver according to the afore-described embodiment of the present invention.

After successful connection of the ASP session, the send transmitter acquires a service description document and transmits CreateSession() to the send receiver. CreateSession() may include a send transmitter ID and file meta information. The file meta information may be mandatory. This is because if the receiver can cancel and amend a session, it needs information about the number of files that the send transmitter will transmit.

### Send Session Termination

Upon expiration of the lifetime of a subscription, the send transmitter or the send receiver may terminate a session or transmit a session end request. Or if the send transmitter cancels the subscription, the send receiver may terminate the session. Or the send transmitter may simultaneously cancel the session and request the session termination. In the presence of a file to be transmitted when the session is cancelled, the send receiver may automatically end the session after the file is completely transmitted. Or the send transmitter may request the session termination immediately. The send receiver may be configured to notify the send transmitter of a change in any parameter as an event.

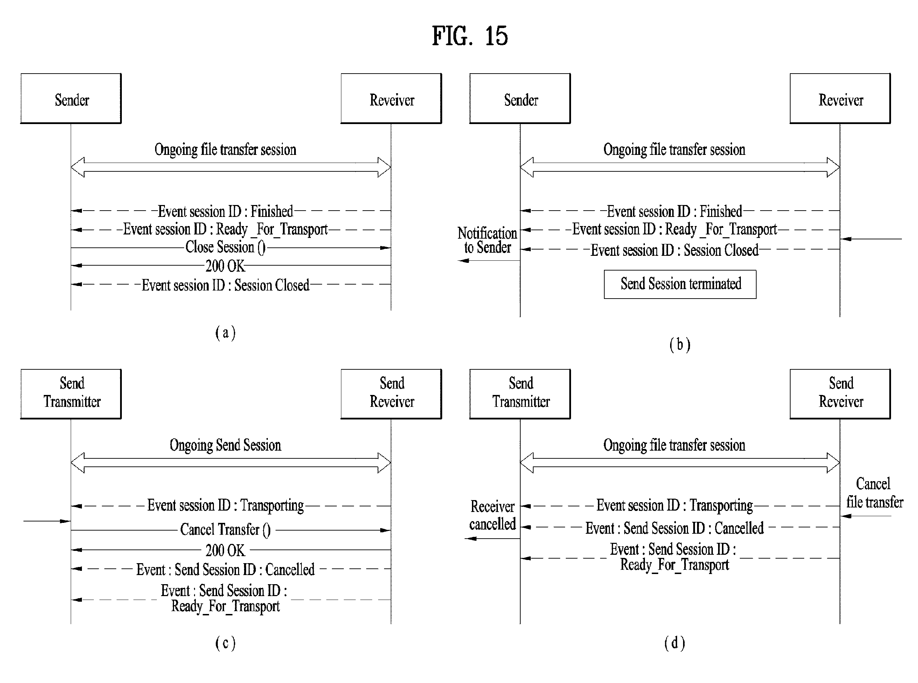

Fig. 15(a) illustrates termination of a WFD send session by a send transmitter. If all files are transmitted, the send transmitter may perform a CloseSession() action. Upon receipt of CloseSession(), the send receiver checks the status of the session. If the status is "Ready_For Transport", the send receiver terminates the session and notifies the send transmitter of the termination success. If the status is "Transporting", the send receiver returns error code 704 indicating "Transport in progress". After the session is terminated, a FileTransfer service hosted by the send receiver generates an event of setting a TransportStatus parameter to SessionID:SessionClosed.

Fig. 15(b) illustrates termination of a WFD send session by a send receiver. If the send receiver wants to cancel all send sessions or all files transmitted to the send receiver, the send receiver may terminate the session. If the send receiver requests session termination, a FileTransfer service hosted by the send receiver generates an event of setting a TransportStatus parameter to SessionID:SessionClosed. Upon receipt of the SessionClosed event, the send transmitter notifies the user of the session termination and terminates the session.

Fig. 15(c) illustrates cancellation of an on-going session by a send transmitter and Fig. 15(d) illustrates cancellation of an on-going session by a send receiver.

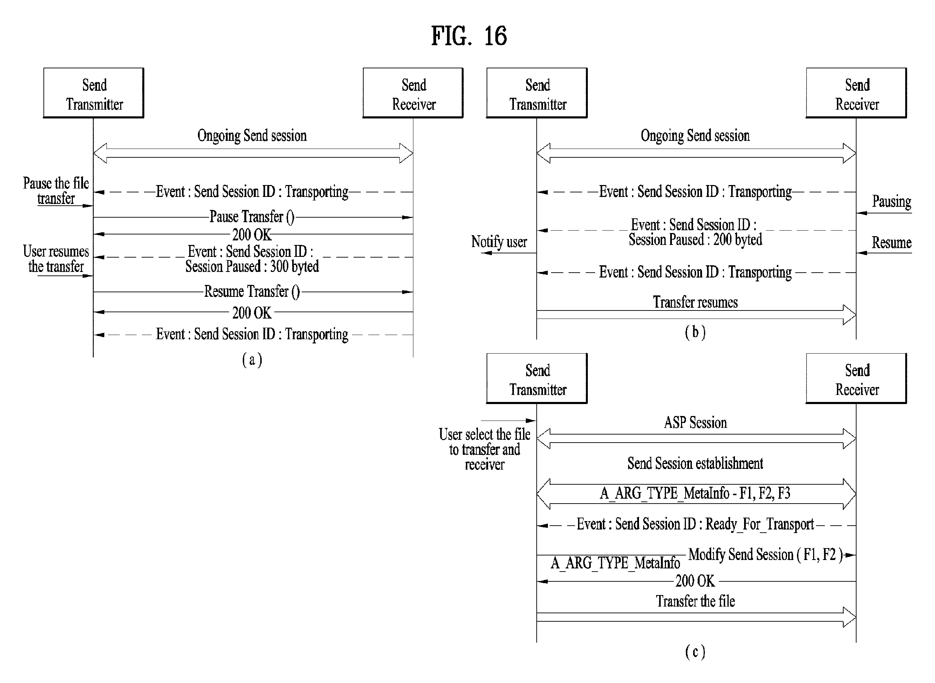

Fig. 16(a) illustrates discontinuation and resumption of an on-going transfer by a send transmitter. The discontinuation and resumption of the transfer may be indicated to the user.

Fig. 16(b) illustrates discontinuation and resumption of an on-going transfer by a send receiver and Fig. 16(c) illustrates modification of a WFD send session.

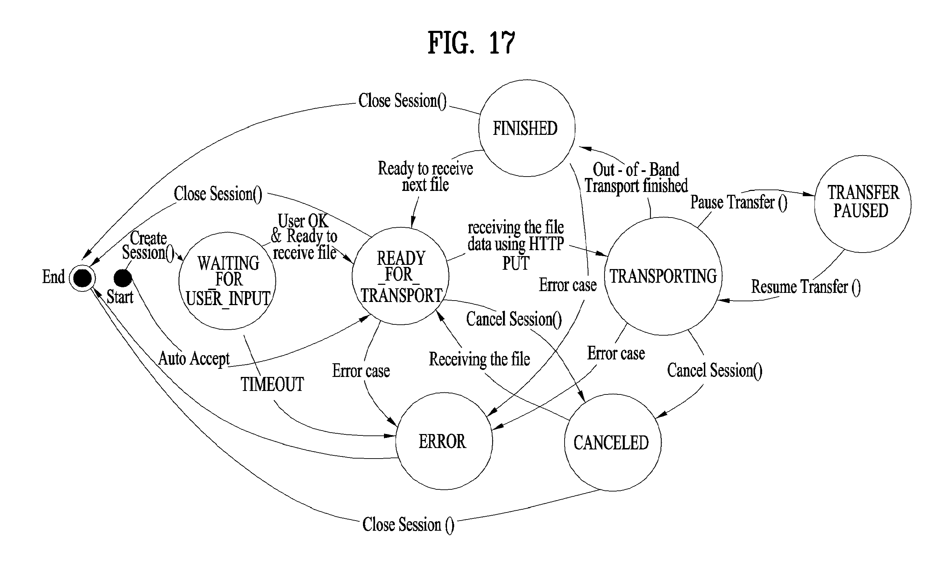

Fig. 17 is a state diagram of a file transfer session according to an embodiment of the present invention.

Referring to Fig. 17, if a CancelSession() action is performed in a Ready_For_Transport state, there is no need for performing CancelSession() after transitioning to a Canceled state. Accordingly, an End state may be transitioned to immediately by performing a CloseSession() action even in the Ready_For_Transport state. Or it is regulated that the CancelSession() action is not performed in the Ready_For_Transport state.

It may be regulated that the CancelSession() action is performed in a TransferPaused state. In this case, the TransferPaused state is switched to the Cancelled state. In the TransferPaused state, the CancelSession() action may be performed upon request of the send transmitter/receiver or without a request. Further, the TransferPaused state may be transitioned to a SessionCLosed state by immediately performing a CloseSession() action even in the TransferPaused state. The CancelSession() action may be performed upon request of the send transmitter/receiver or without a request.

A Transporting state may be switched to the SessionCLosed state by performing the CloseSession() action in the Transporting state without the two-step operation of performing the CancelSession() action in the Transporting state and switching to the SessionCLosed state by performing the CloseSession() action in the Cancelled state. The CancelSession() action may be performed upon request of the send transmitter/receiver or without a request.

The following [Table 2] describes each state and state transition illustrated in Fig. 17.

**[Table 2]**

| State | Description | Transition From | Transition To |
|---|---|---|---|
| Start | This is an initialization phase for the File Transfer service | In Start state when the FileTransfer service receives the CreateSession action to create the new file transfer session, the service can automatically accept the incoming session and change to READY FOR TRANSPORT state. Or in case of manual acceptance it transmits to intermidiate state "WAITING_FOR_USER_INPUT" | |
| WAITING_FOR_USER_INPUT | This is an intermediate state, in which FileTransfer service waits for the user input for the incoming file transfer session request. | When user accept the incoming file transfer, the FileTransfer state change to READY FOR TRANSPORT state When user did not respond to the incoming file transfer, and on internal time out event then the FileTransfer state change to ERROR state. | |
| READY_FOR_TRANSPORT | This state represents the FileTransfer service is ready to receive the file from the Transmitter device. | When the service receives the file data via HTTP PUT or any other out of band mechanism, then the service changes the state to the TRANSPORTING In case of any internal error conditions, the service may change the state to ERROR | When file is completely received by the service then, the service may change the state from FINISHED to READY_FOR_TRA NSPORT. |
| TRANSPORTING | This state of the FileTransfer service represents the file transfer is ongoing, and the service is receiving the file data. | When ongoing File Transfer service receives the CancelTransferaction,then the service stop receiving file data and changes the state to CANCELLED When the service receives the PausedTransfer action, it stop receiving the file data till the transfer is resumed using ResumeTransfer action. During this time FileTransfer service changes the state to TRANSFER PAUSEDWhen the file is completely received front the Transmitter device, then the service change the state to FINISHED | When the previously paused transfer is resumed by the Transmitter or by the Receiver it changes the state from TRANSFER PAUSED to TRANSPORTING |
| SessionPaused:[noofbytes ] | This is the state to represent the ongoing file transfer is paused by the Transmitter device or the Receiver device. | When the service receives the ResumeTransfer action or the Receiver resumes the previously paused file transfer, then the service starts receiving the file and change the state to TRANSPORTING | |
| FINISHED | This is an intermediate state which represents the ongoing file transfer is completed | When there are still one or more file transfer to he expected, then the service changes the state to READY_FOR_TRANSFPORT.W hen there are no file transfer to be expected, and the service receives the CloseSession action then it changes the state to END | |
| CANCELLED | This is an intermediate state to represent current ongoing file transfer is cancelled by the Transmitter device or the Receiver device | The service stops receiving the ongoing file data and changes the state to READY FOR_TRANSPORT when the service expects to receive one and more file transfer request When the service docs not expect to receive the file and receives the CloseSession action, then the service changes the state to END | |

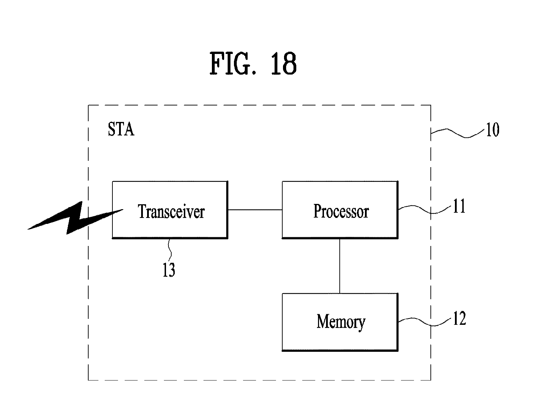

Fig. 18 is a block diagram of a wireless apparatus according to an embodiment of the present invention.

The wireless apparatus 10 may include a processor 11, a memory 12, and a transceiver 13. The transceiver 13 may transmit/receive wireless signals. For example, the transceiver 13 may implement the PHY layer in an IEEE 802 system. The processor 11 may implement the PHY layer and/or the MAC layer in the IEEE 802 system, in electrical connection to the transceiver 13. The processor 11 may be configured to perform one or more operations of an application, a service, and an ASP layer according to the afore-described various embodiments of the present invention. Also, a module that performs an operation of the wireless apparatus according to the afore-described various embodiments of the present invention may be stored in the memory 12 and executed by the processor 11. The memory 12 may reside inside or outside the processor 11 and may be connected to the processor 11 by known means.

The wireless apparatus 10 of Fig. 18 may be configured to support WFDS and set up a session. To create a session for a first service, the processor 11 may be configured to set up a P2P connection between a first wireless device and a second wireless device, including a provision discovery procedure between the first and second wireless devices. To create a session for the second service, the processor 11 may be configured to control the transceiver to transmit a session request message REQUEST_SESSION from the first wireless device to the second wireless device (or if the wireless apparatus is the second wireless device, to receive the session request message REQUEST_SESSION). Session information about the second service may be included in the session request message.

The detailed configuration of the wireless apparatus illustrated in Fig. 18 may be specified in such a manner that the above-described various embodiments of the present invention may be implemented independently or in combination of two or more. A redundant description is omitted for clarity.

The embodiments of the present invention may be implemented by various means, for example, in hardware, firmware, software, or a combination thereof.

In a hardware configuration, the method according to the embodiments of the present invention may be implemented by one or more Application Specific Integrated Circuits (ASICs), Digital Signal Processors (DSPs), Digital Signal Processing Devices

(DSPDs), Programmable Logic Devices (PLDs), Field Programmable Gate Arrays (FPGAs), processors, controllers, microcontrollers, or microprocessors.

In a firmware or software configuration, the method according to the embodiments of the present invention may be implemented in the form of modules, procedures, functions, etc. performing the above-described functions or operations. Software code may be stored in a memory unit and executed by a processor. The memory unit may be located at the interior or exterior of the processor and may transmit and receive data to and from the processor via various known means.

The detailed description of the preferred embodiments of the present invention has been given to enable those skilled in the art to implement and practice the invention. Although the invention has been described with reference to the preferred embodiments, those skilled in the art will appreciate that various modifications and variations can be made in the present invention without departing from the spirit or scope of the invention described in the appended claims. Accordingly, the invention should not be limited to the specific embodiments described herein, but should be accorded the broadest scope consistent with the principles and novel features disclosed herein.

### [Industrial Applicability]

While the above-described various embodiments of the present invention have been described in the context of the IEEE 802.11 system, they are applicable to various mobile communication systems in the same manner.

## Claims

1. A method for initializing a send session with a second device by a first device supporting a Wireless Fidelity (Wi-Fi) Direct service, the method comprising:
establishing an Application Service Platform (ASP) session; and
initializing a send session using a Uniform Resource Locator (URL) related to a device description,
wherein the URL related to the device description is acquired before the establishment of the ASP session.

2. The method according to claim 1, wherein the URL related to the device description is included in an Advertisement() method transmitted by a service layer of the second device.

3. The method according to claim 2, wherein the URL related to the device description included in the Advertisement() method is provided to the first device by one or more of a probe request procedure and a service discovery procedure.

4. The method according to claim 2, wherein a discovery procedure related to Universal Plug and Play (UPnP) is not performed during the initialization of the send session.

5. The method according to claim 2, wherein a parameter related to a service information request transmitted by a service layer of the first device is set to a value other than NULL.

6. The method according to claim 4, wherein a parameter related to a service information request is included in a SeekService method.

7. The method according to claim 1, wherein the URL related to the device description is included in a ConfirmService() method transmitted by a service layer of the second device.

8. The method according to claim 7, wherein the URL related to the device description included in the ConfirmService() method is transmitted to the first device by a provision discovery procedure or a group formation procedure.

9. The method according to claim 1, wherein the URL related to the device description is included in a SessionReady() method transmitted by a service layer of the second device.

10. The method according to claim 1, further comprising:
acquiring a device description using a URL related to the device description; and
acquiring information related to file transfer using a URL related to a service description included in the device description.

11. The method according to claim 10, wherein the device description includes one or more of device information, a parameter, an Operating System (OS) type/version, a UPnP version, the URL related to the service description, a URL for control, a URL for eventing, and a URL for presenting.

12. The method according to claim 1, wherein the first device is capable of performing a CloseSession() action even though the transfer is in a canceled state.

13. A first device supporting a Wireless Fidelity (Wi-Fi) Direct service, the first device comprising:
a reception module; and
a processor,
wherein the processor is configured to establish an Application Service Platform (ASP) session and initialize a send session using a Uniform Resource Locator (URL) related to a device description, and
wherein the URL related to the device description is acquired before the establishment of the ASP session.
